# EUROPEAN PATENT APPLICATION

(11) **EP 4 395 282 A1**
(43) Date of publication of application: **03.07.2024**
(21) Application number: 22217308.0
(22) Date of filing: 30.12.2022
(51) Int. Cl.: H04L 67/568, H04L 67/5681

(54) **AN EDGE-SERVER APPARATUS FOR CACHING CONTENT IN A CONTENT DELIVERY NETWORK**

(30) Priority: 28.12.2022 PT 2022118439
(71) Applicant: NOS Inovação, S.A., 4460-191 Senhora da Hora (PT)
(72) Inventor: PINTO SEQUEIRA DOS SANTOS GRAÇA, JORGE FILIPE, 4460-191 SENHORA DA HORA (PT); NUNES FERREIRA, JOÃO MIGUEL, 4460-191 SENHORA DA HORA (PT); CORREIA RODRIGUES, GONÇALO, 4460-191 SENHORA DA HORA (PT); MENDES, EDGAR, 4460-191 SENHORA DA HORA (PT); MARQUES, PEDRO, 4460-191 SENHORA DA HORA (PT)
(74) Representative: do Nascimento Gomes, Rui

(57) **Abstract**

The present application describes an edge-server apparatus (1) for caching content in a content delivery network (2). The edge server apparatus (1), comprises a network interface unit (1.1), a processor unit (1.2) and a memory unit (1.3). Particularly, the network interface unit is a 10 Gigabit Ethernet network adapter, the processor unit is a multi-core x86-64 microprocessor and the memory unit is of a RAM type comprising NVMe (Non-Volatile Memory Express) drives. Such edge-server therefore provides a scalable, resilient, flexible and configurable solution, which allows a high streaming traffic capacity per server, without service degradation, and being able to anticipate and respond to unpredictable peaks in use in a dynamic, autonomous and automated way, guaranteeing the continuity of the operation and the security of the servers (1).

## Description

### FIELD OF THE APPLICATION

The present application relates to systems for delivery content objects over the internet to an end user system with a content delivery network (CDN).

### PRIOR ART

Given the rapid growth of production and transmission of content globally, several Content Delivery Networks (CDN) have emerged to facilitate and accelerate the transmission of content between owners and the growing number of end users. In particular, over-the-top (OTT) streaming services benefit most from CDN networks.

CDNs distribute content across multiple servers located throughout the world. These servers, called edge servers, cache content so that, when requested, content is redirected from the nearest server to the end user. Indeed, by storing content in strategic geographic locations, close to end users, these servers allow reducing network latency and increasing the speed of access to content.

However, there have been significant changes in consumer behaviour patterns and an exponential increase in the consumption of online information and entertainment services, which translates into an increase in traffic from streaming services.

Faced with this rapid increase, edge cache servers that support content distribution platforms began to experience difficulties in meeting the needs of the entire ecosystem. Specifically, these servers are limited to a specific streaming traffic capacity, which in many cases is insufficient to guarantee the minimum performance necessary to deliver the OTT service to all the platform's clients.

To cope with this increase, one way to ensure the streaming service to clients of OTT content distribution platforms is to increase the number of edge cache servers of the network. However, this approach not only does not solve the problem related to the limited capacity of streaming traffic that each server has, but also implies additional costs related to acquisition and installation of the new servers.

The present solution intended to innovatively overcome such issues.

### SUMMARY OF THE APPLICATION

It is therefore an object of the present application, an edge-server apparatus. Such edge-server provides a scalable, resilient, flexible and configurable solution, allowing a high streaming traffic capacity per server, without service degradation, and being able to anticipate and respond to unpredictable peaks in use in a dynamic and autonomous way, guaranteeing the continuity of the operation and the security of the servers.

To achieve this purpose, it is presented a new edge server architecture, comprising a network interface unit, a processor unit and a memory unit. Particularly, the network interface unit is a 10 Gigabit Ethernet network adapter, the processor unit is a multi-core x86-64 microprocessor and the memory unit is of a RAM type comprising NVMe (Non-Volatile Memory Express) drives.

The present application also relates to a content delivery network comprising a plurality of edge-server apparatus (1) as described herein.

### DESCRIPTION OF FIGURES

Figure 1- representation of an embodiment of edge-server apparatus described in the present application, wherein the reference signs represent:
   1 - edge-server apparatus;
   1.1 - network interface unit;
   1.2 - processor unit;
   1.3 - memory unit.
Figure 2 - representation of an embodiment of a content delivery network comprising the edge-server apparatus described in the present application, wherein the reference signs represent:
   1 - edged-server apparatus;
   2 - content delivery network;
   2.1 - router;
   3 - user equipment;
   4 - media content server.

### DETAILED DESCRIPTION

The more general and advantageous configurations of the present application are described in the Summary. Such configurations are detailed below in accordance with other advantageous and/or preferred embodiments of implementation of the server apparatus disclosed herein.

The present application relates to an edge-server apparatus (1) to cache content in a content delivery network (2).

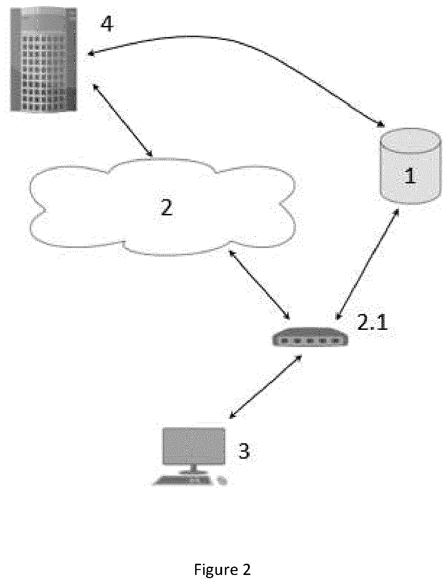

Figure 2 illustrates a geographically dispersed content delivery network (2), such as the internet. Network (2) can include routers (2.1) that communicate with each other and form an autonomous system (AS). An AS is a collection of one or more associated Internet Protocol (IP) prefixes with a clearly defined routing policy that governs how the AS exchanges routing information with other autonomous systems. AS can connect to other ASs that form network (2) through peering points at routers (2). Additionally, AS can include client systems, such as user equipment (3), connected to respective routers (2) to access the network (2). Routers (2) can provide ingress and egress for client systems. AS can further include a Domain Name System (DNS) server adapted to translate a human readable hostname into an IP address. For example, user equipment (3) can send a request to resolve a hostname to DNS server, and DNS server can provide user equipment (3) with an IP address corresponding to the hostname.

Various types of user equipment (3) may be coupled to the network (2) including set-top boxes, IP TV devices, personal computers, minicomputers, whether desktop, laptop, or otherwise, and mobile devices such as handheld computers, PDAs, personal media devices, WiFi-enabled devices and so forth, and content within the network (2) is selectively cached and de-cached based on one or more criteria such as frequency of use.

Particularly, user equipment (3) can retrieve information from a media content server (4). For example, user equipment (3) can retrieve a web page provided by server (4). Additionally, user equipment (3) may download content files, such as graphic, audio, and video content from server (4). The time required for user equipment (3) to retrieve the information from the server (4) normally is related to the size of the file, the distance the information travels, and congestion along the route. Additionally, the load on the server (4) is related to the number of user equipment (3) that are actively retrieving information from the server (4). As such, the resources such as processor, memory, and bandwidth available to the server (4) limit the number of user equipment (3) that can simultaneously retrieve information from the server (4).

The network includes edge servers (1) replicating content on the server (4) that can be located more closely within the network (2) to the user equipment (3). Edge-server apparatus (1) can link to multiple routers (2.1). Thus, user equipment (3) can be assigned to an edge server apparatus (1) to decrease the time needed to retrieve information, such as by selecting the edge server apparatus (1) closer to the particular user equipment (3). When assigning an edge server apparatus (1) to a user equipment (3), the edge server apparatus (1) closest to the user can be selected. The closest edge server apparatus (1) may be the edge server (1) having a shortest network distance, a lowest network cost, a lowest network latency, a highest link capacity, or any combination thereof.

User equipment (3) may send a request for information to edge server apparatus (1). If edge server (1) has the information stored in a cache (information is cacheable), it can provide the information to user equipment (3). This can decrease the distance the information travels and reduce the time to retrieve the information. Alternatively, when edge server (1) does not have the information, it can retrieve the information from media content server (4) prior to providing the information to the user equipment (3). Since edge server apparatus (1) has a cache of a limited size, the addition of new content to the cache may require old content to be removed from the cache.

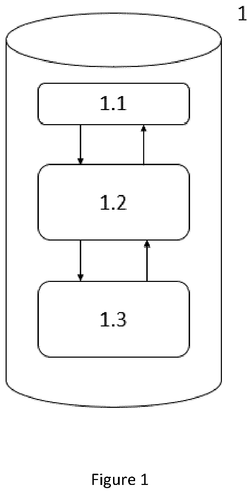

In a preferred embodiment, as illustrated in figure 1, the edge-server apparatus (1) comprises:
- A network interface unit (1.1), configured to connect the apparatus to the network;
- a processor unit (1.2) comprising processing means adapted to implement:
- a content delivery module configured to serve media content to a user equipment (3); and
- a memory unit (1.3) adapted to receive and store media content from at least one media content server (4).

Said units (1.1, 1.2, 1.3) are operatively connected, that is, units are connected to each other in such a way that they work together. The network interface unit is a 10 Gigabit Ethernet network adapter, the processor unit is a multi-core x86-64 microprocessor and the memory unit is of a RAM type comprising NVMe drives. Additionally, the memory unit further comprises processing means adapted to implement a cache entity configured to implement cache policies to manage the stored media content.

With these set of features, a scalable, resilient, flexible and configurable server architecture solution is obtained, which allows a high streaming traffic capacity per server (at least 30Gbps), without service degradation, and being able to anticipate and respond to unpredictable peaks in use in a dynamic, autonomous and automated way, guaranteeing the continuity of the operation and the security of the servers (1).

In one embodiment of the edge-server apparatus (1), the network interface unit has at least 6x10Gbps data ports, the processor unit is a 64-bit 24-core x86 server microprocessor and the memory unit has at least 256 GB and 3200Mhz. Additionally, the processing means of the processor unit (1.2) are further adapted to implement a network traffic management module configured to:
- load distribution using all microprocessor cores;
- allocate microprocessor and memory resources without loss of data;
- load offload and tunning at the network interface unit; and
- stack IP/TCP tuned for video streaming.

More particularly, the microprocessor cores are of the affinity type and wherein the loading distribution is executed by implementing a computational routine adapted to distribute hardware interrupts over the multiple cores of the processor unit. Preferentially, the computational routine is an irqbalance routine. Additionally, allocating microprocessor and memory resources is executed using memory-tunning techniques.

In another embodiment, the network interface unit (1.1) comprises ring buffers, and the network traffic management module is adapted to perform load offload and tunning at the network interface unit by implementing an ethtool computational routine.

In another embodiment, for stacking IP/TCP tuned for video streaming, the network traffic management module is configured to:
- examine and change kernel parameters at runtime; preferentially by implementing a sysctl computational routine;
- manage current TCP/IP network configurations; preferentially by implementing an ipconfig computational routine;
- implement traffic control mechanisms; preferentially using tc qdisc computational routines.

With the application of these definitions to the edge-server apparatus (1), it is possible to obtain a superior content delivery performance (around 50 Gbps) and with average response times of less than 200ms.

In another embodiment of the edge-server apparatus (1), the cache policies implemented by the cache entity of the memory unit are one of the following: least recently used policy, least frequently used policy.

In another embodiment of the edge-server apparatus (1), the processing means of the processor unit (1.3) implementing the content delivery module are further configured to:
- receive from a user equipment (3) a request for media content;
- serve the media content to said user equipment (3) if said media content is cacheable; or
- forward the request to serve media content to media content server (4).

The present application also relates to a content delivery network (3). Said network (3) comprises a plurality of user equipment (3), a plurality of media content servers (4) and a plurality of edge-server apparatus (1).

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. An edge-server apparatus configured to cache content in a content delivery network, comprising:
- A network interface unit, configured to connect the apparatus to the network;
- a processor unit comprising processing means adapted to implement:
- a content delivery module configured to serve media content to a user equipment; and
- a memory unit adapted to receive and store media content from at least one media content server; said unit comprising processing means adapted to implement a cache entity configured to implement cache policies to manage the stored media content;
the units being operatively connected, and
wherein,
- the network interface unit is a 10 Gigabit Ethernet network adapter;
- the processor unit is a multi-core x86-64 microprocessor; and
- the memory unit is of a RAM type comprising NVMe (Non-Volatile Memory Express) drives.

2. The apparatus according to claim 1, wherein:
- the network interface unit has at least 6x10Gbps data ports;
- the processor unit is a 64-bit 24-core x86 server microprocessor; and
- the memory unit has at least 256 GB and 3200Mhz.

3. The apparatus according to claim any of the previous claims, wherein the processing means of the processor unit are further adapted to implement a network traffic management module; said module being configured to:
- load distribution using all microprocessor cores;
- allocate microprocessor and memory resources without loss of data;
- load offload and tunning at the network interface unit; and
- stack IP/TCP tuned for video streaming.

4. The apparatus according to claim 3, wherein the microprocessor cores are of the affinity type and wherein the loading distribution is executed by implementing a computational routine adapted to distribute hardware interrupts over the multiple cores of the processor unit; preferentially, the computational routine is an irqbalance routine.

5. The apparatus according to claim 3 or 4, wherein allocating microprocessor and memory resources is executed using memory-tunning techniques.

6. The apparatus according to any of the claims 3 to 5, wherein the network interface unit comprises ring buffers, and
the network traffic management module is adapted to perform load offload and tunning at the network interface unit by implementing an ethtool.

7. The apparatus according to any of the claims 3 to 6 wherein for stacking IP/TCP tuned for video streaming, the network traffic management module is configured to:
- examine and change kernel parameters at runtime; preferentially by implementing a sysctl computational routine;
- manage current TCP/IP network configurations; preferentially by implementing an ipconfig computational routine;
- implement traffic control mechanisms; preferentially using tc qdisc computational routines.

8. The apparatus according to any of the previous claims, wherein the cache policies implemented by the cache entity are one of the following: least recently used (LRU) policy, a least frequently used (LFU) policy.

9. The apparatus according to any of the previous claims, wherein the processing means of the processor unit implementing the content delivery module being further configured to:
- receive from a User Equipment a request for media content;
- serve the media content to said User Equipment if said media content is cacheable; or
- forward the request to serve media content to media content server.

10. A content delivery network comprising:
- a plurality of user equipment;
- a plurality of media content servers;
- a plurality of apparatus according to claims 1 to x.
